# EUROPEAN PATENT APPLICATION

(11) **EP 2 386 448 A1**
(43) Date of publication of application: **16.11.2011**
(21) Application number: 11166072.6
(22) Date of filing: 13.05.2011
(51) Int. Cl.: B60R 11/02, F16M 13/02, F16M 13/00

(54) **Holder device of portable objects, for example mobile telephones and/or satellite phones and/or palm-held computers and/or mini and micro processors and/or the like**

(30) Priority: 13.05.2010 IT MI20100851; 12.05.2011 IT MI20110835
(71) Applicant: Studio A.I.P. S.R.L., 21040 Oggiona con Santo Stefano (VA) (IT)
(72) Inventor: Brivio, Antonio, 21040 Oggiona con Santo Stefano (Varese) (IT); Brivio, Marco, 21040 Oggiona con Santo Stefano (Varese) (IT)
(74) Representative: Ponzellini, Gianmarco

(57) **Abstract**

A holder device for portable objects (4) is disclosed, comprising: at least a support structure (2), at least a retaining organ (5) comprising at least a jaw (6) engaged to the support structure (2) and which comprises at least a pair of free ends (6a) arranged one opposite another with respect to the support structure (2), the free ends (6a) forming a housing seating (16) for accommodating and retaining a portable object (4) in a predetermined retained position, which object (4) exhibits a dimension, in particular a thickness, which is considerably smaller with respect to the other two dimensions; the jaw (6) is configured such as to enable a relative nearing of the free ends (6a) to one another, following application of a force (F) directed to extracting the portable object (4) from the housing seating (16).

## Description

### FIELD OF THE INVENTION

The invention concerns a holder device of objects, being portable objects, in particular mobile telephones and/or satellite telephones and/or palm-held devices and/or mini and micro processors and/or the like.

In general holder devices can retain any object or component which can be blocked in position, whether of small or average size.

The object of the present invention is particularly (though not exclusively) applicable to the sector of accessories dedicated to holders for portable objects which are used both on-board vehicles for transporting persons and/or objects, such as motor vehicles and/or motor cycles, and for vehicles for sporting use, such as bicycles and/or the like.

### DESCRIPTION OF THE PRIOR ART

As is known, there exist holder devices which are destined to support objects of smallish size. Some are appropriately structured and conformed such as to support particular types of portable objects. Others are universal and can be adjusted in relation to a shape of various portable objects present on the market.

As is known, universal holder devices comprise a main structure provided with a rest plane for engaging a rear surface of the portable object to be supported. One or more abutments emerge from a lower edge of the rest surface such as to retain at least a lower edge or side of the object to be held.

Generally the rest surface and the abutments are orientated in such a way as to define an L-shaped rest seating for supporting the above-mentioned portable object.

When the portable object is held by the device, it is in contact with the rest surface and the abutments thereof according to the preferred orientation and/or inclination of the user.

The structure of these devices is further provided with an appropriate retaining organ able to block the portable object to be supported in the predetermined engaged position.

The retaining organ is adjustable in relation to the width of the portable object to be supported.

In particular, the retaining organ comprises a pair of mobile jaws that are each mobile with respect to the structure between a neared position and a distanced position. Each jaw comprises a cogging along the body thereof which enables it, via special command organs, to be moved with respect to the structure, as well as to be blocked in a predetermined position.

Once the portable object to be supported on the rest surface and on the respective abutments of the structure has been positioned, the jaws are commanded to near the structure up to intercepting the flanks of the apparatus. In this position, the jaws are blocked such as to retain the portable object in the respective position.

With the aim of enabling the resting of portable objects that are longer than the rest surface of the structure, the structure can comprise an extensible configuration such as to provide a greater rest surface.

An attaching flange is also engaged to the structure, which enables engaging the device to a body or an element of the vehicle and/or the bicycle, whatever the user is using.

A first example, described in document US 2005/0205728, illustrates a holding device for a measuring instrument. The device includes a support structure which enables the device to engage with external bodies. A holding element is connected to the support structure, having substantially an L-shape and enabling a vertical resting of the measuring instrument. The device further comprises two retaining arms substantially exhibiting an L-shape, connected to the support structure and arranged one opposite the other with respect to the support structure.

Each retaining arm and the support element are mobile with respect to the support structure, such as to adapt to the dimensions of the measuring instrument.

A second example, described in document US 20082/03260A1, shows a portable holder device for portable objects which comprises a base, which enables connection with external support structures. The base comprises a plurality of first and second seatings arranged on opposite sides of the base. Each seating engages a flexible gripping element. The base and the gripping elements form a housing seating for portable objects. In particular the flexibility of each gripping element enables both insertion and retaining of portable objects.

A third example, described in document EP 1894788 A1, discloses a support structure which engages a plurality of retaining devices. The support structure is both the support for the portable object and the engaging base of the retaining elements which operate directly to block the portable object.

Each retaining device rotates from a first position in which the portable object can be positioned on the support structure to a second position in which the portable object is maintained against the support structure. Each retaining element is maintained stably in the first and second position thanks to the action of a bi-stable spring engaged to each device and the support structure.

Although the holder devices of known type enable portable objects to be supported, the applicant has found that they are not however without drawbacks and can be improved in various respects in relation to the stable connection between the structure of the device and the supported apparatus, as well as the structural integrity of the device and apparatus. In particular, the applicant has found that the known holder devices do not guarantee a strong and steady grip on the portable objects to be held, when there are conditions of sharp movements of the vehicles or bicycles to which the holder devices are applied.

In fact the portable objects are mainly supported by the surface and by the reliefs they rest on, and retained thereon by the lateral pressure exerted by the respective pair of jaws.

In the known devices, the supported portable objects are not constrained in any way on the side opposite to the rest reliefs, and therefore if the lateral pressure exerted by the jaws is insufficient for retaining the portable objects, any violent movement of the vehicle or the bicycle to which the device is fixed causes their disengagement and the consequent falling and possible damage thereto.

### AIM OF THE INVENTION

The main aim of the present invention is to provide a holder device for portable objects, able to resolve the problems encountered in the prior art.

An aim of the present invention is to provide a holder device able to stably retain any portable object.

A further aim of the present invention is to structurally safeguard the portable objects from eventual damage due to accidental falls caused by brusque movements of the vehicle or the bicycle to which the device is fixed.

The above-specified aims, and others besides, are substantially attained by a holder device for portable objects, in particular mobile telephones and/or satellite phones and/or palm-held devices and/or mini and micro processors and/or the like, as expressed and described in one or more of the following claims.

Aspects of the invention are described herein below.

In a first aspect, a holder device for portable objects (4) is disclosed, comprising: at least a support structure (2), at least a retaining organ (5) comprising at least a jaw (6) engaged to the support structure (2) and which comprises at least a pair of free ends (6a) arranged one opposite another with respect to the support structure (2), the free ends (6a) forming a housing seating (16) for accommodating and retaining a portable object (4) in a predetermined retained position, which object (4) exhibits a dimension, in particular the thickness, which is considerably smaller with respect to the other two dimensions, characterised in that the jaw (6) is configured such as to enable a relative nearing of the free ends (6a) to one another, following application of a force (F) directed to extracting the portable object (4) from the housing seating (16).

In a second aspect, a holder device is provided according to the preceding aspect, in which the jaw (6), during application of the extraction force (F) on the portable object (4), blocks the object (4) by means of a deformation of the jaw (6), free ends (6a) of which jaw (6) converge along arched trajectories, for example symmetrical.

In a third aspect, a holder device is comprised according to any one of the preceding aspects, in which the jaw (6) comprises at least a pair of free ends (6a) and at least a body (6b), the body (6b) exhibiting an elongate and substantially plate-shape which extends along an extension direction, the body (6b) comprising a connecting portion (6c) destined to engage with the structure (2), the free end (6a) of the jaw (6) being arranged on an opposite side to the connecting portion (6c), the free end (6a) comprising at least a contact portion (7), connected to the body (6b), which extends along a transversal development direction, in particular perpendicularly, to the extension direction of the body (6b), the free end (6a) further comprising a retaining portion (9), connected to the contact portion (7), which develops along a transversal development direction, in particular perpendicularly, with respect to the development direction of the contact portion (7), the retaining portion (9) developing in a direction of the support structure (2); the body (6b), the contact portion (7) and the retaining portion (9) forming a substantially C-shaped profile which enables the portable object (4) to be retained internally of the housing seating (16).

In a fourth aspect, a holder device is comprised, according to any one of the preceding aspects, in which the body (6b) of the jaw (6) exhibits, along the extension direction thereof, a length (L1), and in which the contact portion (7) exhibits, along the development direction thereof, a length (L2), and wherein the relation between the length (L1) of the body (6b) and the length (L2) of the contact portion (7) is greater than 2, in particular greater than 3.

In a fifth aspect a holder device as in any one of the preceding aspects is included, in which the retaining portion (9) exhibits, along the development direction thereof, a length (L3), and in which the relation between the length (L1) of the body (6b) and the length (L3) of the retaining portion (9) is greater than 5, in particular greater than 8, and/or in which the relation between the length (L2) of the contact portion (7) and the length (L3) of the retaining portion (9) is greater than 2, in particular greater than 3.

In a sixth aspect, a holder device according to any one of the preceding aspects from 3 to 5 is included, in which the development direction of the contact portion (7) is inclined with respect to the extension direction of the body (6b) of the jaw (6), by an angle (α) comprised between 80° and 100°, in particular by an angle (α) comprised between 85° and 95°, and/or in which the development direction of the retaining portion (9) is inclined, with respect to the development direction of the contact portion (7), by an angle (β) comprised between 80° and 100°, in particular by an angle (β) comprised between 80° and 95°, the angles (α, β) being the internal angles of the C facing towards the support structure (2).

In a seventh aspect, a holder device is included according to any one of the preceding aspects, wherein the connecting portion (6c) is engaged to the support structure (2) via a sliding constraint or alternatively via a joint constraint.

In an eighth aspect, a holder device according to any one of the preceding aspects is comprised, in which the portable object (4) exhibits a substantially parallelepiped form, in particular a rectangular parallelepiped, or a substantially cylindrical shape, the portable object (4) exhibiting a thickness which is considerably less than the length and width of the portable object (4).

In a ninth aspect, a holder device according to the preceding aspect is included, in which the portable object (4) substantially exhibits a prevalent development plane defined by the length and width of the portable object (4), the portable object (4) being arranged in the housing seating (16) in the predetermined engaging position, with the prevalent development plane substantially parallel to the extension direction of the body (6b) of the jaw (6) and/or to the extension direction of the body (11b) of the positioning element (11).

In a tenth aspect a holder device according to any one of the preceding aspects is disclosed, in which the retaining portion (9) exhibits a surface (10) facing towards the body (6b) of the jaw (6) destined to contact an upper surface (4c) of the portable object (4), the retaining portion (9), during application of the extraction force (F) on the portable object (4), generating a resultant reaction force (R) on the engaging surface (10), the resultant force (R) exhibiting a point of application on the engaging surface (10) and which generates a flexing momentum on the body (6b) of the jaw (6) which tends to near the free ends (6b) of the jaw (6) enabling the portable object (4) to be retained internally of the housing seating (16).

In an eleventh aspect a holder device according to the preceding aspect is disclosed, in which the resultant force (R) can be broken down into a normal force (Fn) directed perpendicularly to the engaging surface (10) and a tangential force (Ft) directed tangentially to the engaging surface (10), the normal force (Fn) generating a closing momentum (Mc) defined by the product of the normal force (Fn) over a distance (Do) of the directrix lie line of the normal force (Fn) from an engaging point (X0) of the body (6b) with the support structure (2), the tangential force (Ft) generating an opening momentum (Ma) defined as the product of the tangential force (Ft) over a distance (Dv) of the application line directrix of the tangential force (Ft) from the engaging point (X0), the closing momentum (Mc) being greater than the opening momentum (Ma).

In a twelfth aspect a holder device according to the preceding aspect is provided, in which the resultant force (R) exhibits a direction of application an extension of which intersects the body (6b) of the jaw (6) at an intersection point (X), the intersection point (X) being arranged between an attachment point (Xa) of the contact portion (7) with the body (6b) and an engaging point (X0) at which, during application of the extraction force (F), the maximum flexing momentum is developed.

In a thirteenth aspect a holder device according to the preceding aspect is provided in which the intersection point (X) and the attaching point (Xa) of the contact portion (7) exhibit a distance (D1) that is smaller than a distance (D2) defined between the reference point (X0) and the attaching point Xa) of the contact portion (7).

In a fourteenth aspect a holder device according to the preceding aspect is comprised, in which the contact portion (7) exhibits a rest surface (8) facing towards the support structure (2) destined to contact an edge (4b) of the portable object (4), useful for preventing displacements of the object (4) along the extension direction of the body (6b) of the jaw (6).

In a fifteenth aspect, a holder device of any one of the preceding aspects is comprised, in which the jaws (6) form a single solid body or alternatively are two distinct entities.

In a sixteenth aspect, a holder device according to the preceding aspect is comprised, in which the jaws (6) are two distinct entities and at least one of the jaws (6) is mobile in relation to the support structure (2), such as to be able to vary the dimensions of the housing seating (16) in relation to the dimensions of the portable object (4), in particular in which at least one of the jaws (6) is mobile from a first position, in which the free end (6a) of the jaw is distanced from the support structure (2) to a second position, in which the free end (6a) is neared to the support structure (2).

In a seventeenth aspect, a holder device according to the preceding aspect is disclosed, in which the bodies (6b) of the jaws (6) are partially superposed on one another, in particular longitudinally superposed on one another, and can slide one on another or alternatively in which the connecting portions face one another.

In an eighteenth aspect, a holder device is comprised according to any one of the preceding aspects, in which the force (F) is an extracting force of the portable object (4) which tends to free the portable object from the predetermined engaging position, the force (F) exhibiting a transversal application direction, in particular perpendicular, to the extension direction of the body (6b) of the jaw (6) and having an opposite direction with respect to the housing seating (16), the jaw (6) being configured such as to guarantee retaining of the portable object (4) with a force (F) that is less than 200N, in particular less than 150N and still more in particular less than 100N.

In a nineteenth aspect a holder device is provided according to any one of the preceding aspects, in which the retaining organ (5) comprises at least a positioning element (11) which comprises at least a body (11b) and at least a free end (11a), the body (11b) exhibiting a substantially plate-shaped form and being destined to engage to the support structure (2), the free end (11 a) extending transversally, in particular perpendicularly, with respect to the body (11 b) of the positioning element (11), the positioning element (11) being arranged transversally, in particular perpendicularly, with respect to the jaw (6) and being configured such as to control the displacement of the portable object (4) internally of the housing seating (16) in a transversal direction to the jaw (6).

In a twentieth aspect, a holder device according to the preceding aspect is provided, in which the free end (11a) of the positioning element (11) comprises at least a contact portion (12) extending transversally with respect to the body (11b), the contact portion (12) comprising a rest surface (13) destined to contact at least an edge of the portable object (4) to be supported.

In a twenty-first aspect, a holder device according to the preceding aspect is provided, in which there is a pair of positioning elements (11) arranged one opposite another with respect to the support structure (2), and in which at least one of the positioning elements (11) is mobile in relation to the support structure (2) such as to enable an adapting to the dimensions of the portable object (4), in particular in which at least one of the positioning elements (11) is mobile from a first position, in which the free end (11a) thereof is distance from the support structure (2) and a second position, in which the free end (11a) is neared to the support structure (2).

In a twenty-second aspect, a holder device according to any one of the preceding aspects from 15 to 17 comprises blocking means (17) operatively associated in part to the support structure (2) and in part to the jaw (6) and/or to the positioning element (11), the blocking means (17) being configured such as to be arranged in a regulating condition and a blocking condition such as to respectively enable movement and blocking of the jaw and/or of the positioning element (6, 11) with respect to the support structure (2).

In a twenty-third aspect a holder device according to the preceding aspect is provided, in which the blocking means (17) comprise screws and/or grub screws and/or cotter pins and/or elastic elements.

In a twenty-fourth aspect a holder device according to any one of the preceding aspects is provided, in which the support structure (2) comprises at least a seating (19) destined to engage the jaw (6) and/or the positioning element (6, 11).

In a twenty-fifth aspect a holder device according to the preceding aspect is provided, in which the seating (19) comprises at least a first seating (19a) destined to receive the jaw (6) and at least a second seating (19b) destined to receive the positioning element (11), and wherein the first and the second seating (19a, 19b) are communicating seatings or alternatively are distinct seatings.

In a twenty-sixth aspect a holder device is provided according to any one of the preceding aspects, in which the support structure (2) comprises a first and a second half-shell (14, 15) superposed on one another, and in which the jaw (6) is engaged to the first half shell (14) while the positioning element is engaged to the second half-shell (15).

In a twenty-seventh aspect a holder device of any one of the preceding aspects is provided, in which the support structure (2) comprises a rest portion (21) destined to contact a rear surface (4a) of the portable object (4), the rest portion (21) being configured such as to maintain the upper surface (4c) of the portable object (4) in contact with the retaining portion (9) of the jaw (6), the rest portion (21) exhibiting a first thickness, in particular a maximum thickness, in a disengaged condition of the portable object (4) from the housing seating (16), and in which the rest portion (21) exhibits a second thickness, smaller than the first thickness, during the arranging of the portable object (4) in the predetermined engaged position, the rest portion (21) during the arranging of the portable object (4) in the housing seating (16) generating a thrust force on the portable object (4) destined to near the object to the retaining portion (9).

In a twenty-eighth aspect a holder device according to any one of the preceding aspects is comprised, in which the jaw (6) and/or the support structure (2) is realised in a plastic material and/or in a metal material.

In a twenty-ninth aspect a holder device according to any one of the preceding aspects is disclosed, in which the support structure (2) exhibits a greater rigidity than the jaws (6).

In a thirtieth aspect a holder device according to any one of the preceding aspects from 22 to 25 includes connecting means (20) which comprise: at least a blocking opening (18), in particular a plurality, afforded in each half-shell (14, 15) of the support structure (2); at least a connecting element (22), in particular a plurality, operatively engaged in the respective blocking opening (18) of the half-shells (14, 15), the connecting element (22) being a threaded element which operates between a first condition, in which the half-shells (14, 15) are loose with respect to one another, and a second condition, in which the half-shells (14, 15) are pressed against one another.

In a further independent aspect, a use of a holder device (1) according to any one of the preceding aspects is comprised, for supporting at least a portable object (4) having a dimension, in particular a thickness, which is considerably smaller than the other two dimensions, in particular length and breadth, for example in which the portable object (4) comprises at least one selected from a group including: a cellular telephone, a satellite telephone, a palm-held device, mini and micro processors.

In a further independent aspect, possibly combined with any one of the preceding aspects, a holder device is provided for objects, comprising a retaining organ comprising a jaw exhibiting at least a pair of free ends arranged one opposite the other and facing, which internally form a housing seating configured such as to accommodate and retain in position an object exhibiting a thickness dimension which is considerably smaller than the other two dimensions, the jaw exhibiting a body of an elongate plate-form, extending along an extension direction and exhibiting a connecting portion destined to engage to a support structure, at least a free end being connected to the body and positioned on an opposite side of the connecting portion, the free end comprising a retaining portion; the retaining organ further comprises an abutting portion emerging transversally from the body and a retaining portion emerging from the abutting portion transversally thereto and on an opposite side to the plate body such as to define a C-shaped retaining structure for retaining the object, the jaw being configured such as to enable a relative nearing of the free ends to one another following an application of a force F directed to extracting the object from the seating, the retaining organ also including one or more positioning elements provided with a body, in particular a plate-shaped, and a free end emerging transversally there-from, the free end of the position element being arranged transversally with respect to the jaw such as to contain the object in the housing seating, retaining the object in a transversal direction to the retaining direction of the jaw.

### BRIEF DESCRIPTION OF THE DRAWINGS.

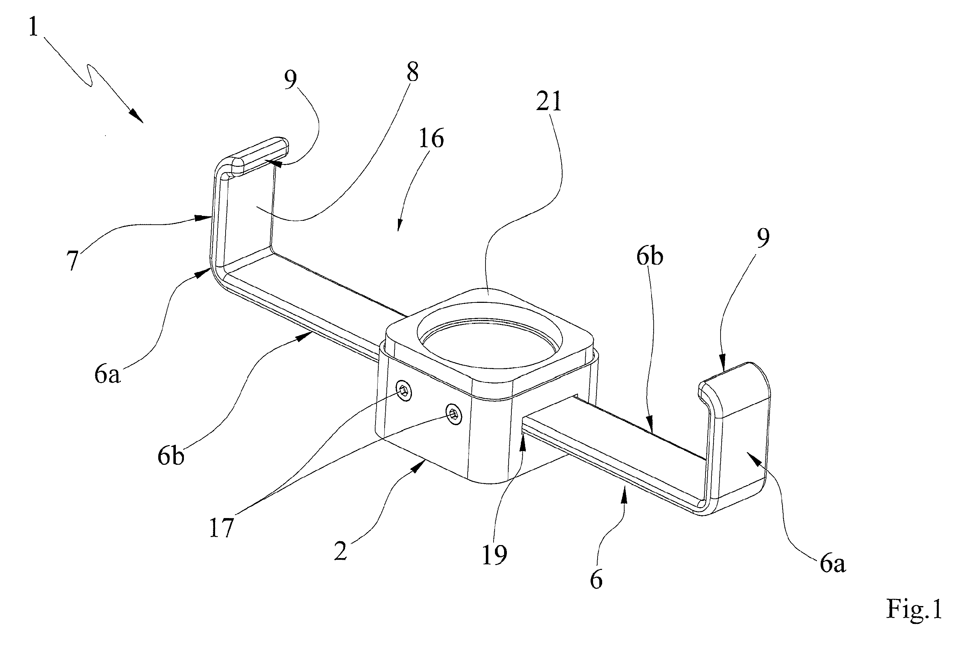

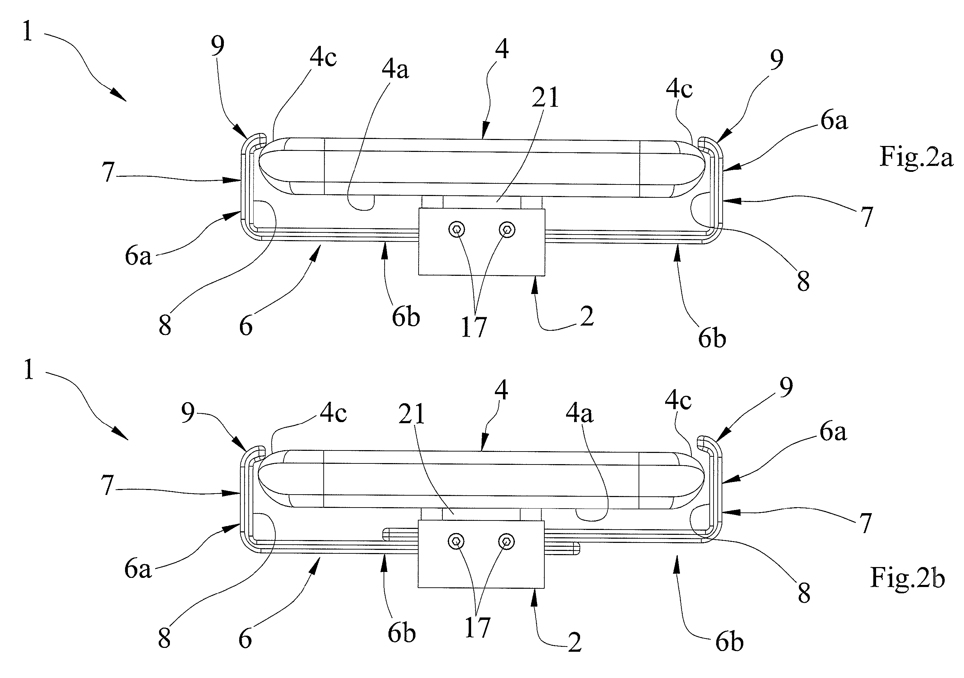

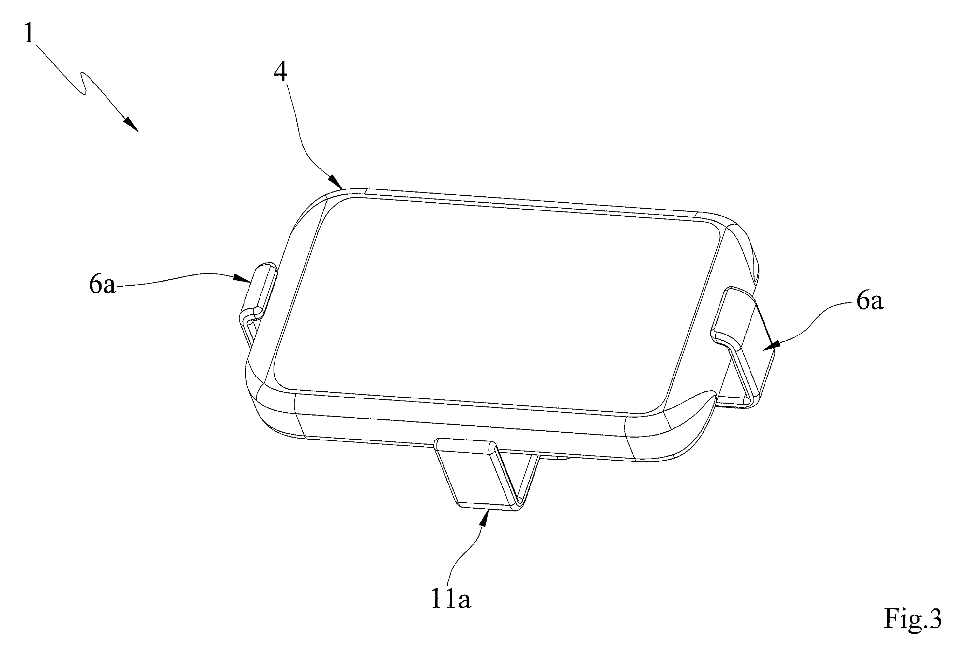

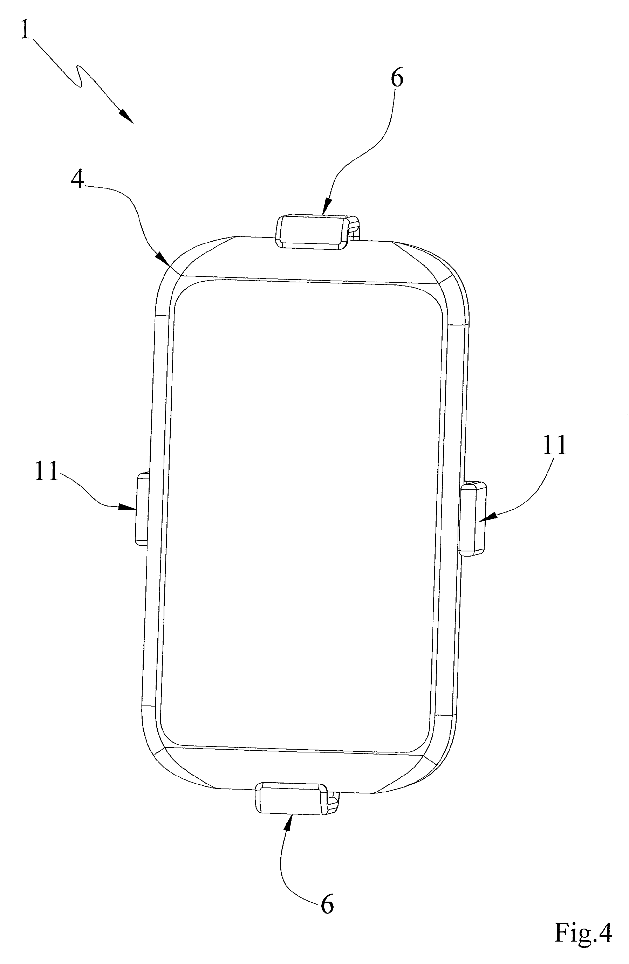

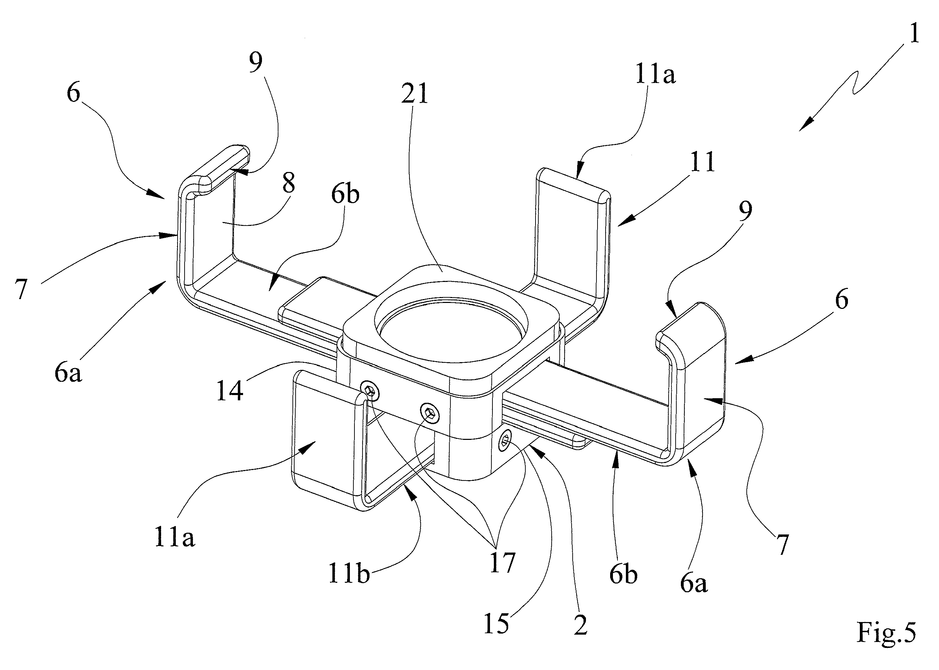

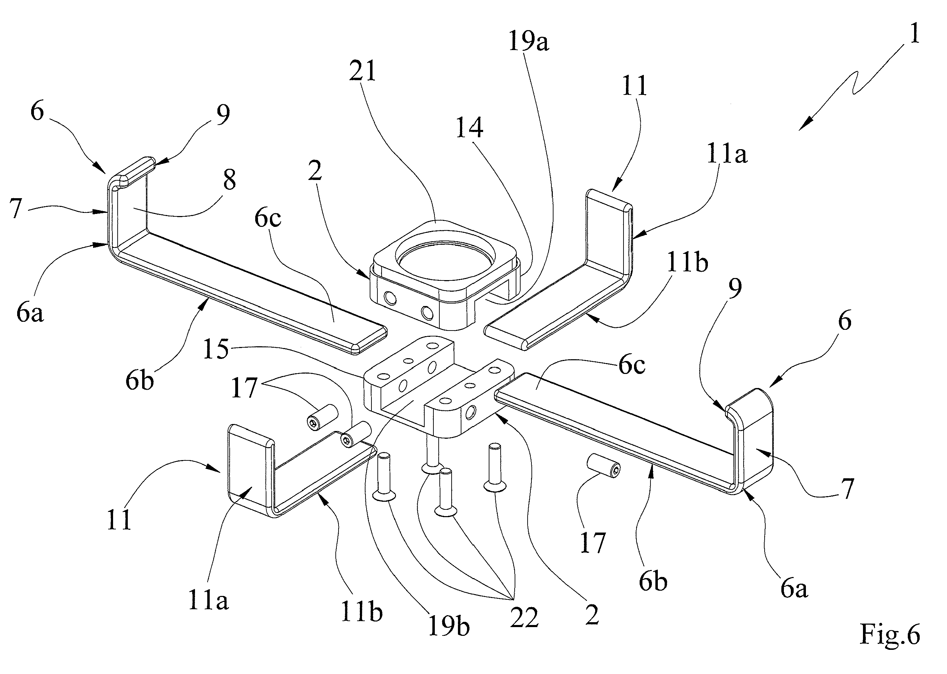

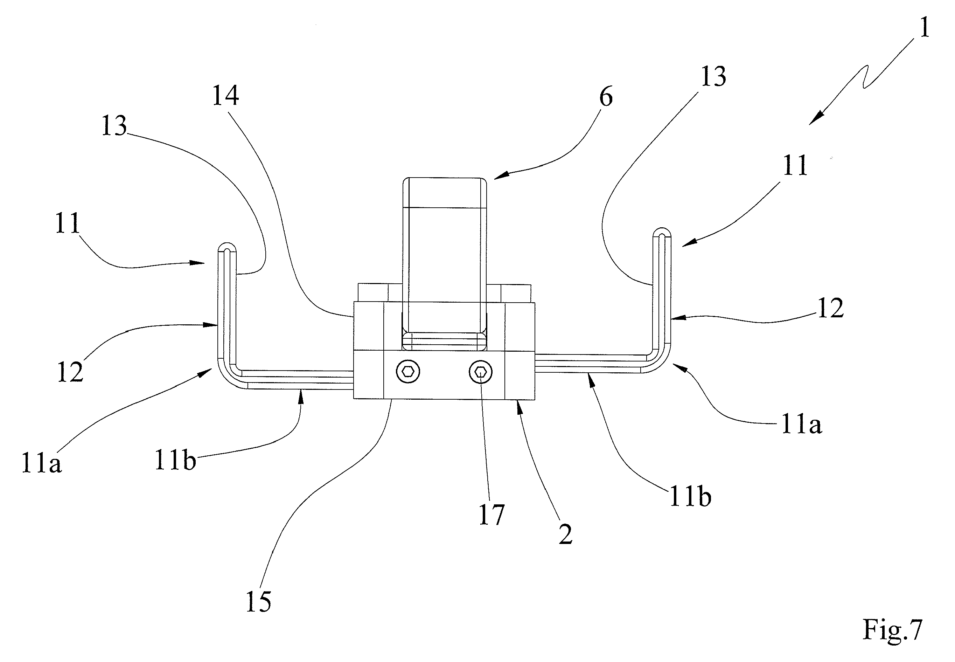

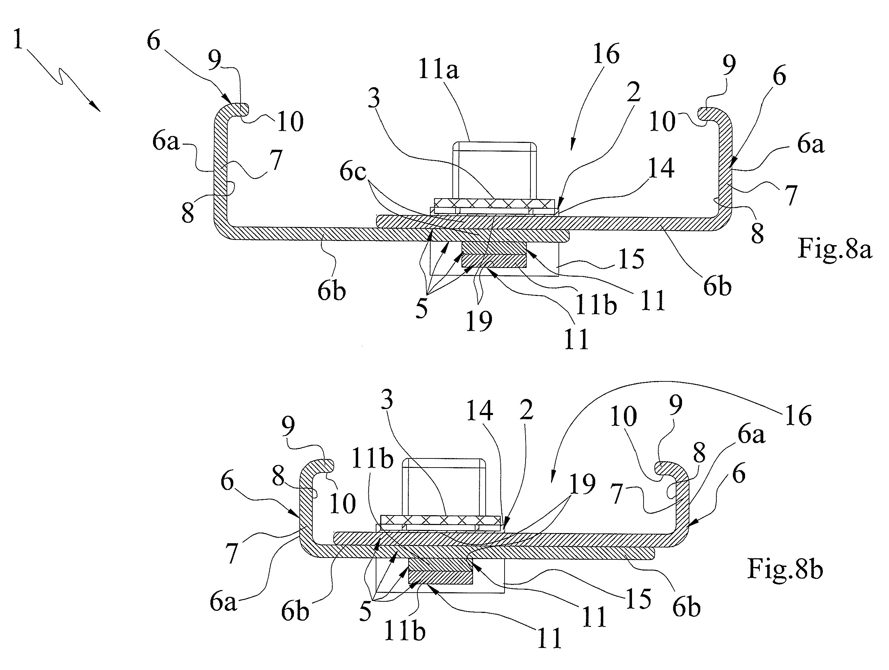

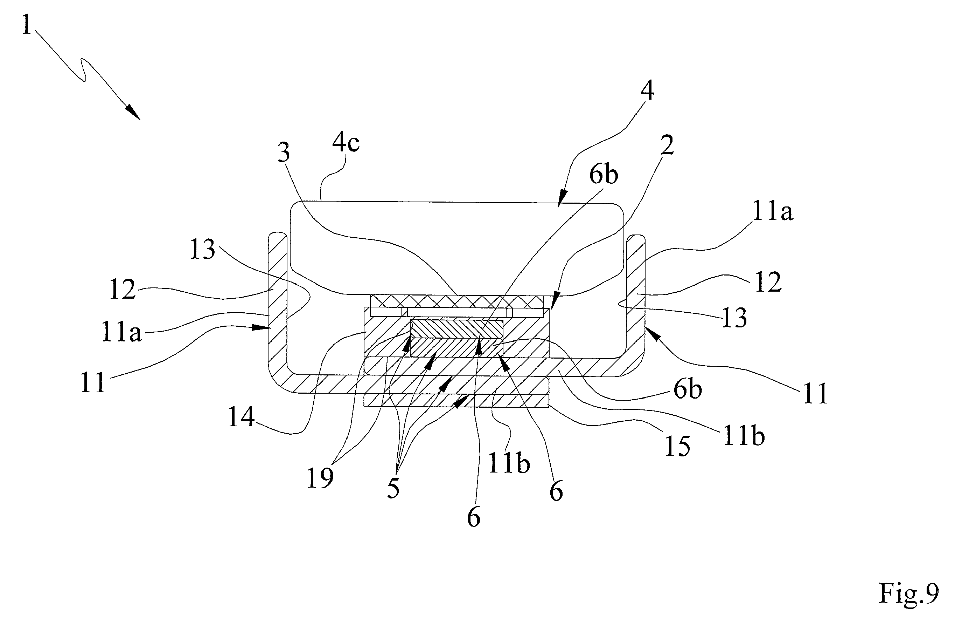

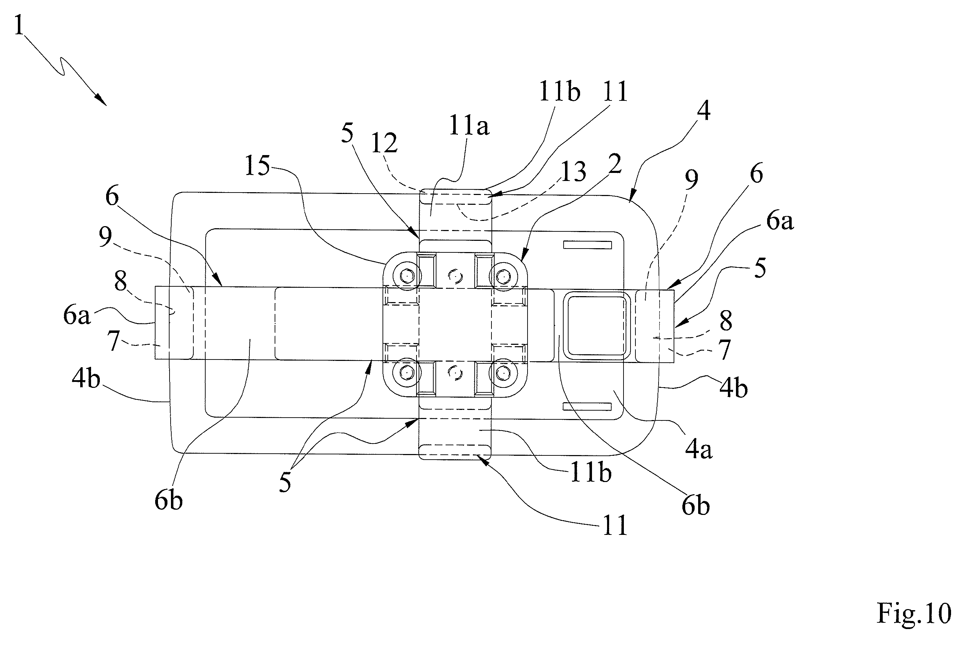

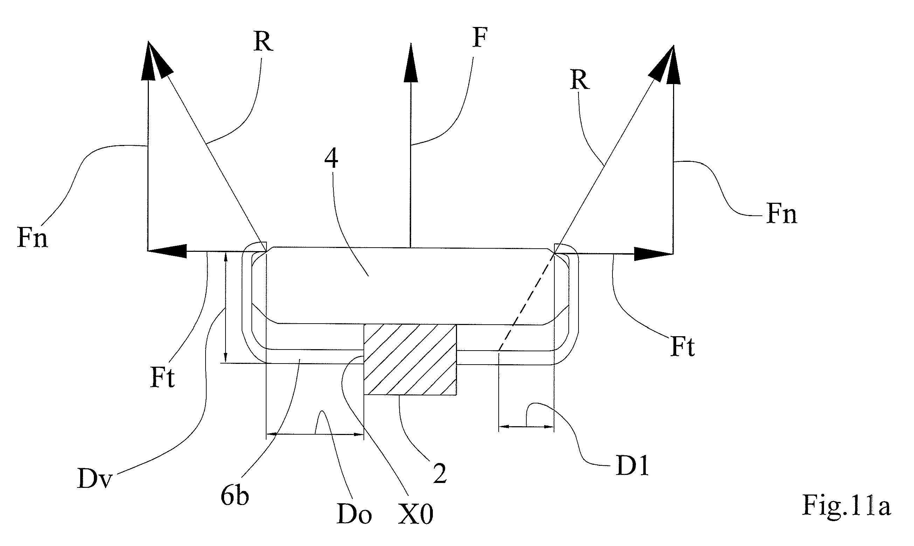

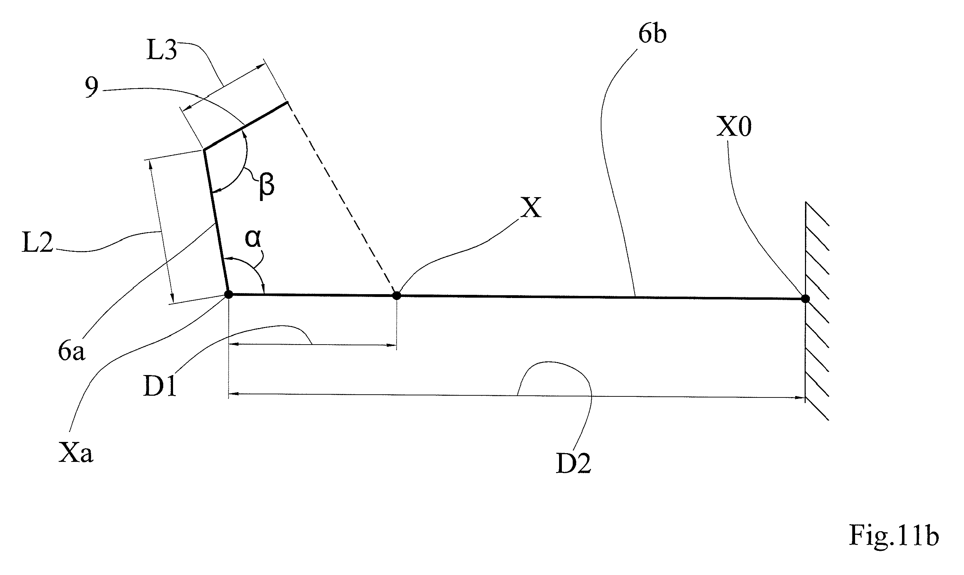

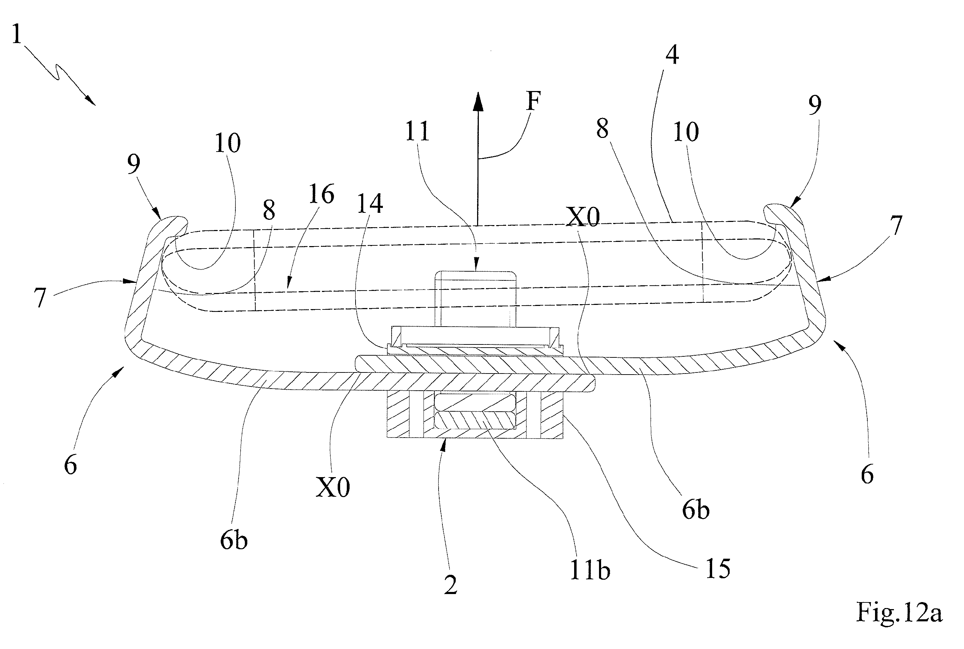

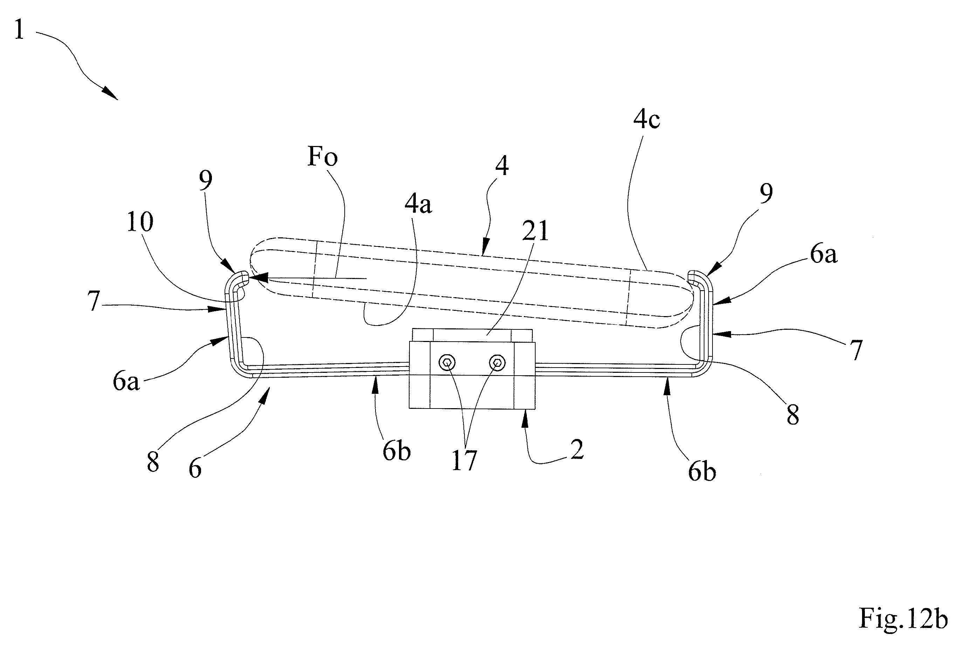

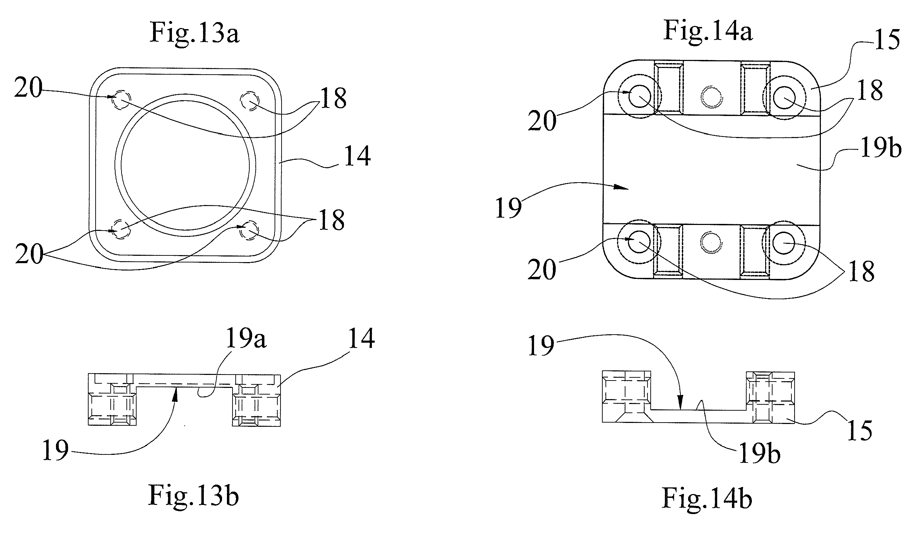

Some embodiments and some aspects of the invention will be described herein below with reference to the accompanying figures of the drawings, provided merely by way of non-limiting example, in which:
➢ Figure 1 is a perspective view of a holder device in a first simplified embodiment;
➢ Figure 2a is a lateral view of a first model of the holder device of figure 1;
➢ Figure 2b is a lateral view of a second model of the holder device of figure 1;
➢ Figure 3 is a perspective view of a holder device according to a second embodiment;
➢ Figure 4 is a perspective view of a holder device according to a third embodiment;
➢ Figure 5 is a further perspective view of the holder device of figure 4;
➢ Figure 6 is an exploded view of the holder device of figure 5;
➢ Figure 7 is a front view of the holder device of figure 5 and 6;
➢ Figures 8a and 8b are transversal sections of the device according to the third embodiment;
➢ Figure 9 is a further transversal section of the holder device according to the third embodiment;
➢ Figure 10 is a view from below of a holder device according to the third embodiment;
➢ Figure 11a is a schematic representation of a discomposition of the forces acting on a jaw of a retaining organ during application of an extracting force on a portable object;
➢ Figure 11b is a schematic view of the jaws;
➢ Figure 12a is a further transversal section of the holder device of the third embodiment which shows the deforming of the jaw during application of an extraction force imparted on the portable object;
➢ Figure 12b is a transversal section of the holder device according to the third embodiment, which shows the deforming of the jaw during application of an opening force on the jaw;
➢ Figures 13a and 13b respectively show a view from above and a lateral view of a first half-shell of a support structure which is a part of the holder device according to the first and/or the second and/or the third embodiment;
➢ Figures 14a and 14b respectively show a view from above and a lateral view of a second half-shell of a support structure which is a part of the holder device according to the first and/or the second and/or the third embodiment;

### DETAILED DESCRIPTION

With reference to figures from 1 to 10, 12a and 12b, reference numeral 1 denotes in its entirety a holder device for portable objects 4, for example electronic apparatus such as mobile telephones and/or satellite telephones and/or palm-held devices and/or mini and micro processors and/or the like.

In general the holder device 1 enables portable objects 4 to be retained in a predetermined engaged position, which objects 4 exhibit a dimension, in particular a width, which is significantly smaller than the other dimensions.

The portable objects 4 generally exhibit a substantially parallelepiped form (or alternatively cylindrical) and can be (though not in a limited way) of small or medium dimensions, of a modest weight or possibly heavier. In more detail, the portable objects exhibit a rectangular parallelepiped shape having a significantly smaller thickness than a length and width of the portable object, possibly with connecting sections between transversal surfaces.

The quantitative relation between the length and thickness of the portable object 4 is greater than 5, in more detail greater than 10. In particular, the relation between the width and the thickness of the portable object 4 is greater than 3, in more detail greater than 5.

The holder device 1 can be used for retaining portable objects 4 where there is a need for secure and reliable constraint combined with rapid engagement/disengagement capabilities.

Merely by way of example the holder device 1 can be used on vehicles (for example motor cars or bicycles) but also on any other rest surface, wall or support element, enabling the object to be supported even in an upturned position, and to resist vibrations or impacts even of considerable entity.

Among the possible additional uses (other than on a bicycle or a motor car) are in an industrial context (for portable measuring instruments), in a domestic environment (for housing mobile instruments such as remote control units), in a personal collocation (around the neck or on a belt), or even in the aeronautic/aerospatial field, thanks to its practicalness and functionality in use, etc.

The holder device 1 comprises a support structure 2 comprising a connecting portion (not illustrated in the figures) which enables connecting the device with external support structures which are not a part of the actual device.

The support structure 2, in a non-limiting way, is configured such as to contact and support the portable object 4. In particular, as can be seen from figures 2a, 2b and 9, the support structure 2 is able to provide support to the portable object 4 thanks to the contact with a rear surface 4a thereof, once the portable object 4 has been arranged in the predetermined use position.

In greater detail, the support structure 2 comprises, in a non-limiting way, a rest portion 21 destined to contact the rear surface 4a of the portable object 4.

The rest portion 21 is configured such as to maintain the upper surface 4c in contact with a retaining organ 5 of the holder device 1, which will be more fully described herein below. The contact between the portable object 4 and the retaining organ 5 provides a greater stability to the portable object 4, preventing it from being subject to undesired movements which might have a negative effect on the retaining of the object.

In particular, the rest portion 21 exhibits a first thickness, in particular a maximum thickness, in the disengaged condition of the portable object 4 of the retaining organ 5 (figure 12b). The rest portion 21 exhibits a second thickness, smaller than the first thickness, during the arrangement of the portable object 4 into the predetermined engaged position.

The deforming or adaptation which the rest portion 21 is subject to during the positioning of the portable object 4 into the predetermined engaged position depends on the elasticity thereof (made for example of rubber) or by the thickness of the portable object 4.

Once the portable object 4 has been arranged in the predetermined engaged position, the rest portion 21 exerts a reaction force which pushes the portable object 4 itself and forces the contact of the object 4 with the retaining organ 5.

In the accompanying figures of the drawings, the rest portion 21 partially covers the upper part of the support structure 2 facing towards the rest side of the portable object 4. In a further embodiment, not represented in the accompanying figures, it is possible to entirely cover the object 4 or alternatively arranged discrete portions on the portion facing towards the portable object 4.

The rest portion 21 is, in a non-limited way, made of elastically yielding material able to adapt to the rear surface 4a of the portable object and thus provide an optimal rest.

The rest portion 21 is realised using a soft material, also for preventing damage to the rear surface 4a of the apparatus. In particular the rest portion 21 can be made of a foam material, plastic, rubber or foam rubber, or a combination of one or more of these materials, or another suitable elastic material.

The support structure 2 can be constituted by a single body, as is visible in figures 1, 2a and 2b, or alternatively constituted by a plurality of parts destined to cooperate with one another in order to form the support structure 2.

This case is illustrated in figures from 5 to 10 and from 12a to 14b in which the support structure 2 is made up of a first half-shell 14 and a second half-shell 15 superposed on one another.

As can be seen in the figures, the first half-shell 14 represents the part facing towards the portable object 4 and thus comprises the above-mentioned rest portion 21.

The second half-shell 15 represents the part of the support structure 2 facing towards the external support structure. In particular it is the second half-shell 15 which bears the connecting portion (not represented in the accompanying figures) for connecting the holder device 1 to external structures which are not a part of the holder device 1.

In the latter case, the support structure 2 comprises connecting means 20 which can connect the first and the second half-shell 14, 15. In particular, the connecting means 20 are elements that can reversibly connect two half-shells. In a non-limiting way, the connecting means 20 are represented as threaded elements.

In particular both the first and the second half-shell 14, 15 have threaded openings 18 internally of which connecting elements 22 (represented by screws) engage. The connecting means 20 can be clips, glue or connecting elements able to guarantee blocking of the first and second half-shells 14, 15.

The support structure 2 comprises at least a seating 19 destined to engage the retaining organ 5 which will be more fully described herein below.

The shape and arrangement of the seating 19 depend on the type and form of the retaining organ 5. In particular, figure 1 shows a seating 19 passing through the support structure 2 and which develops along a prevalent development direction.

Alternatively the seating 19 exhibits a first and a second seating 19a, 19b (figure 6 and figures from 13a to 14b) which develop transversally, in particular perpendicularly to one another.

In greater detail, the first seating 19a is, in a non-limiting way, arranged on the first half-shell 14 (figures 13a and 13b) while the second seating 19b is, in a non-limiting way, arranged on the second half-shells (figures 14a and 14b).

The support structure 2 represents the substantially rigid part of the holder device 1. In fact the material and shape of the support structure 2 lend a certain degree of rigidity thereto.

As can be seen in the figures, the support structure 2 exhibits, in a non-limiting way, a substantially parallelepiped shape, in particular a rectangular parallelepiped. Alternatively a support structure 2 can be realised having a cylindrical shape or another shape, the dimensions of which lend a substantial rigidity to the support structure 2.

The support structure 2, as previously mentioned, engages the retaining organ 5 which retains the portable object 4 in the predetermined engagement position.

In the figures of the drawings, in a non-limiting way, three different embodiments of the retaining organ are illustrated.

A first embodiment (most simple) of the retaining organ 5 (figure 1) comprises a body 6b exhibiting an elongate and substantially plate-form which extends along an extension direction. The body 6b comprises a connecting portion 6c which illustrates the part which engages directly with the support structure 2. The connecting portion 6c is connected with the support structure via a sliding constraint, or alternatively a joint-constraint. In the first embodiment the jaw comprises two free ends 6a connected with the body 6b and arranged on opposite sides with respect to the connecting portion 6c. In the first embodiment the body 6b, the connecting portion 6c and the free end 6a form a single solid body.

A second embodiment of the retaining organ 5 (figures 2a and 2b) comprises a jaw 6 composed of two bodies 6b, distinct from one another and substantially identical, arranged one opposite the other with respect to the support structure 2. Each body 6b exhibits an elongate and substantially plate-shape and extends along an extension direction. Each body 6b comprises a connecting portion 6c which represents the part which engages directly with the support structure 2. The connecting portion 6c is connected with the support structure 2 with a sliding constraint or alternatively with a joint-constraint. The jaw 6 comprises a pair of free ends 6a connected to distinct bodies 6b arranged one opposite another with respect to the support structure 2.

A third embodiment of the retaining organ 5 (figures from 4 to 10, 12a and 12b) comprises a jaw 6 composed of two bodies 6b, distinct from one another (in particular substantially identical) arranged one opposite another with respect to the support structure 2. Each body 6b exhibits an elongate and substantially plate-shape and extends along an extension direction. Each body 6b comprises a connecting portion 6c which represents the part which engages directly with the support structure 2. The connecting portion 6c is connected with the support structure with a sliding constraint or alternatively with a joint-constraint. The jaw 6 comprises a pair of free ends 6a connected to distinct bodies 6b arranged one opposite another with respect to the support structure 2.

In the third embodiment, the retaining organ 5 further comprises at least a positioning element 1, which will be more fully described herein below, configured such as to control the displacement and positioning of the portable object 4 in a transversal direction to the jaw 6.

There now follows a detailed description of the jaw 6, the structural and dimensional characteristics of which are common for all three embodiments.

The free ends 6a of the jaw 6 form a housing seating 16 destined to accommodate and retain the portable object 4 in the predetermined engaged position.

As for the shape of the free end 6a, note that this comprises a contact portion 7 connected to the body 6b, which extends along a transversal development direction, in particular perpendicular, to the extension direction of the body 6b.

In more detail, the contact portion 7 comprise a first and a second end; the first end connects to an end of the body 6b of the jaw that is opposite the connecting portion 6c.

The development direction of the contact portion 7 forms an angle α with the extension direction of the body 6b comprised between 70° and 100°, in particular comprised between 80° and 95° (in general the angle used will be 90°).

The contact portion 7 comprises a rest surface 8 facing towards the support structure 2 destined to contact an edge 4b of the portable object 4 (figure 10).

The free end 6a further comprises a retaining portion 9 connected to the contact portion 7 which develops along a transversal development direction, in particular perpendicular, to the development direction of the contact portion 7. In greater detail, the retaining portion 9 connects to the second end of the contact portion 7.

In greater detail with respect to this aspect, the direction of development of the retaining portion 9 forms an angle β with the development direction of the contact portion 7 comprised between 80° and 100°, in particular comprised between 85° and 95° (in general the angle used will be 90°). The angle α, between the body 6b of the jaw 6 and the contact portion 7, and the angle β, between the contact portion 7 and the retaining portion 9, are respectively the internal angles of the housing seating 16 facing towards the support structure 2.

The retaining portion 9 comprises an engaging surface 10 facing towards the body 6b suitable for contacting an upper surface 4c of the portable object 4.

The retaining portion 9 extends in the direction of the support structure 2 such as to form, together with the contact portion 7 and the body 6b, substantially a C-shape, which enables the portable object to be retained internally of the housing seating 16.

As for the dimension of the jaw 6, the body 6b exhibits, along the extension direction, a predetermined length L1.

The contact portion 7 also exhibits, along its development direction, a predetermined length L2.

The retaining portion 9, on the other hand, exhibits a predetermined length L3 along its development direction.

In particular, the relation between the length L1 of the body 6b and the length L2 of the contact portion 7 is comprised between 10 and 2, and in particular it is comprised between 5 and 3. The relation between the length L1 of the body and the length L3 of the retaining portion is comprised between 30 and 5, in particular it is comprised between 20 and 10. The relation between the length I2 of the contact portion 7 and the length L3 of the retaining portion is comprised between 5 and 10, in particular between 6 and 8.

The retaining organ 5 is adjustable in relation to at least one of the dimensions of the portable object 4 to be supported. The retaining organ 5 is preferably adjustable both in relation to length and width of the portable object 4 to be supported.

In particular, in the second and third embodiment in which the jaw 6 is composed of two distinct entities, at least one of the jaws 6 is mobile in relation to the support structure 2 such as to be able to vary the dimensions of the housing seating 16 in relation to the dimensions of the portable object 4. Still in more detail, at least one of the jaws 8 is mobile from a first position, in which the free end 6a thereof is distanced from the support structure 2, and a second position, in which the free end 6a is neared to the support structure 2.

Still with reference to figures 2b, 5, from 7 to 9 and figure 12a , the bodies 6b of the jaw 6 are partially superposed on one another, in particular longitudinally superposed, so that they are slidable with respect to one another when at least a body 6b of the jaw is displaced between the first and the second positions.

As for the third embodiment, as already mentioned, the retaining organ 5 further comprises at least a positioning element 11 (figure 3) which is operatively engaged to the support structure 2.

In particular, as can be seen in figures 4 and 10, there are two positioning elements 11 arranged on respectively opposite sides with respect to the support structure 2, which enable controlling the positioning of the portable object 4 and provide support to the jaw 6. Structurally the positioning element 11 comprises a body 11 b having a substantially plate-shape, destined to engage to the support structure 2. The positioning element further comprises a free end 11 a which extends transversally, in particular perpendicularly, with respect to the body 11 b of the positioning element 11. The positioning element 11 is arranged transversally, in particular perpendicularly, with respect to the jaw 6 and is configured such as to control the displacement of the portable object 4 internally of the housing seating 16 in a transversal direction to the jaw 6. The free end 11a comprises an abutting portion 12 extending transversally with respect to the body 11 b. The abutting portion 12 comprises a rest surface 13 destined to contact an edge of the portable object 4 to be supported.

As with the jaw 6, the positioning element 11 is, in a non-limiting way, transversally mobile, preferably substantially perpendicularly, to the movement direction 11a of the jaw 6, between a first position, in which a free end 11a of the respective second jaw 11 is distanced from the structure 2, and a second position, in which the free end 11a of the respective positioning element 11 is neared to the support structure 2. As can be seen for example in figure 9, in a case which there are two positioning elements, the bodies 11 b are at least partially longitudinally superposed such as to be slidable with respect to one another when at least a positioning element 11 is displaced between the first and the second position.

The bodies 6b, 11 b of the jaw 6 and the positioning element 11 are preferably at least partially superposed at the support structure 2 according to a crossed configuration (figure 6). In detail the bodies 6b, 11 b are superposed internally of the support structure 2 of the holder device 1.

The retaining organ 5 advantageously comprises blocking means 17 operatively associated to the support structure 2 and to the jaws 6 and the positioning element 11 such as to block the jaws, together with the supported portable object 4 (figures from 1 to 3). The blocking means 17 are switchable between an adjusting condition, in which the jaws 6 and the positioning element 11 are mobile between the first and the second position, and a blocking condition, in which they are blocked on and with the support structure 2. In the second condition, the blocking means 17 press the supported portable object 4 against the rest portion 21 of the support structure 2, stabilising the position thereof.

The blocking means 17 advantageously comprise at least a blocking opening 18, preferably a plurality (figures 13a, 13b, 14a and 14b), afforded through each half-shell 14, 15 of the support structure 2 and at least a threaded connecting element 22 (not illustrated), preferably a plurality, operatively engaged in the respective blocking openings 18 of the half-shells 14, 15.

In accordance with the present invention, the threaded connecting element 22 operates between a first condition, in which the half-shells 14, 15 are loose with respect to one another, and the jaw 6 and the positioning element 11 are free to slide longitudinally between the first and the second position, and a second condition, in which the half-shells 14, 15 are pressed one against another and on the bodies 6b, 11 b, blocking them in a predetermined position and pressing the portable object 4 against the rest portion 21, by means of the retaining portions 9 of the free ends 6a of the first jaws 6. In this way, the portable object 4 remains blocked and secured to the structure 2 of the device 1.

In other terms the blocking means 17 are configurable in the second condition with a blocking force that is substantially freely definable as required such as to prevent undesired movements of the jaws and the positioning element.

The jaw 6 is configured such as to enable a relative nearing of the free ends 6a to one another, following the application of a force F directed to extracting the portable object 4 from the housing seating 16.

This mechanism enables the holder device 1 to solidly retain the portable object 4 in the predetermined retaining position.

In particular, the jaw 6, during application of the extraction force F on the portable object 4, blocks the object by means of a deformation of the jaw 6, the free ends 6a of which converge along an arched trajectory, for example symmetrical.

Figure 12a schematically shows the functioning of the jaws during application of the force F.

As previously mentioned, the retaining portion 9 exhibits a surface 10 facing towards the body 6b of the jaw 6 which contacts the upper surface 4c of the portable object 4. The retaining portion 9, during application of the extracting force F on the portable object 4, generates a resultant force R on the engaging surface 10.

The resultant force R exhibits a point of application on the engaging surface 10 which generates a flexing momentum of the body 6b of the jaw 6 that tends to near the free ends 6a of the jaw 6, enabling retaining of the portable object 4 internally of the housing seating 16.

In more detail, the resultant force R can be broken down into a normal force Fn directed perpendicularly to the engaging surface 10 and a tangential force Ft directed tangentially to the engaging surface 10. The normal force Fn generates a closing momentum Mc defined by the product of the normal force Fn over a distance Do of the straight lie directrix of the normal force Fn from an engaging point X0 of the body 6b with the support structure 2. As for the tangential force Ft, this generates an opening momentum Ma defined as the product of the tangential force Ft over a distance Dv of the directrix of application of the tangential force Ft from the engaging point X0.

The jaw 6 enables a closing momentum Mc to be generated which is greater than the opening momentum Ma and consequently enables the free ends of the jaw 6 to be neared for retaining the portable object 4 in the housing seating 16.

The resultant force R of reaction further exhibits an application direction the prolongation thereof intersects the body 6b of the jaw 6 in an intersection point X, which is arranged between an attachment point Xa of the contact portion 7 with the body 6b and the engaging point X0 (see figure 11b).

As can be seen in figure 11b, the intersection point X and the attachment point Xa of the contact portion 7 defines a distance D1 that is smaller than a distance D2 between the reference point X0 and the attachment point X.

In greater detail, in a case in which the jaw 6 exhibits two bodies 6b longitudinally superposed on one another, the engaging point Xo for the body 6b which is further from the portable object 4 displaces to the end of the body 6b located superiorly (figure 12a).

In general terms it can be said that the engaging point Xo is the point of the body 6b in which the maximum flexing momentum is developed.

As previously mentioned, the force F is an extraction force which tends to deconstrain the portable object 4 from the predetermined engaging position.

The force F exhibits a transversal application direction, in particular perpendicular, to the extension direction of the body 6b of the jaw 6 and having an opposite direction to the housing seating 16.

In particular the jaw 6 is able to guarantee retaining of the portable object 4 for a force F of less than 100N, in particular less than 75N, still more in particular less than 50N.

The jaw 6 is configured such as to enable a relative distancing of the free portions 6a from one another, following application of an opening force Fo on the jaw directed to distancing the ends 6a.

Figure 12b shows, in a non-limiting way, a force Fo, substantially parallel to the extension direction of the bodies 6b, applied on the retaining portion 9 and directed oppositely to the support structure.

In particular the opening force Fo can be applied on the retaining portion and/or on the abutting portion and/or on the body 6b.

As for the sense and direction of the opening force Fo, it is also sufficient that it tends to distance the free ends 6a of the jaw 6.

The opening force Fo of the jaw 6 exhibits an intensity that is greater than 20N, in particular greater than 10N.

The deforming of the jaw 6, in particular of the body 6b of the jaw 6, enables optimal retaining, on application of the extraction force F on the portable object 4, and easy extraction thereof on the action of the opening force Fo.

In particular, the deformation of the body influences the displacement of the free end of the jaw, thus enabling excellent retaining and easy freeing of the portable object from the housing seating 16.

In particular, to facilitate retaining and freeing of the portable object 4, it is arranged on the rest portion with the prevalent development plane substantially parallel to the extension direction of the body of the jaw 6 and/or the positioning element 11. In particular the free ends 5a of the jaw constrain the portable object lengthwise.

Of some importance is the fact that the relation k between the free expansion with respect to the base anchoring - i.e. the difference between the lengths L1 and L3 - (denoted by Do in figure 11a) and the height L3 (denoted by Dv is figure 11 a).

This characteristics determines, in a geometrical mathematical way, the point of application of the reaction force along the development axis of the element 6b.

Note that a value of k which enables obtaining the best effect also depends on the angle of the reaction R with respect to the vertical.

If the angle is 0° (with a rectangular object inserted) k can be very small (about 1), while if the object is profiled at the ends (which causes the reaction angle R to increase), the relation k must be larger and reach values of greater than 1.5 and in particular more than 2.

In other terms, k=D_{0 /} Dᵥ is a function of the reaction angle R and when it is greater than 2 the jaw 6 can be configured to enable a relative nearing of the free ends 6a to one another, following application of a force f directed to extracting the portable object 4 from the housing seating 16.

It is worthy of note that the novel principle underpinning the invention could also be exploited for different applications from those illustrated.

Merely by way of example, with the aim of retaining a picture (but more in general an object) a holder device can be provided which comprises a retaining organ comprising a jaw exhibiting at least a pair of free ends arranged one opposite another and facing one another, which internally form a housing seating configured such as to accommodate and retain in position an object exhibiting a thickness which is considerably less than the other two dimensions, the jaw exhibiting an elongate and plate-shaped body along an extension direction and exhibiting a connecting portion destined to engage to a support structure, at least a free end being connected to the body and positioned on an opposite side to the connecting portion, the free end comprising a retaining portion, and the retraining organ further comprising an abutting portion emerging transversally from the body and a retaining portion emerging from the abutting portion transversally thereof and on an opposite side to the plate-shaped body such as to define a C-configured retraining structure for retaining the object, the jaw being configured such as to enable a relative nearing of the free ends to one another following an application of a force F directed to extracting the object from the seating, the retaining organ also including one or more positioning elements provided with a body, in particular a plate-shaped body, the free end of the positioning element being arranged transversally with respect to the jaw such as to contain the object in the housing seating, retaining the object in a transversal direction to the retaining direction of the jaw.

In this case, the support structure will be defined by the wall which supports the picture and the jaw will be constituted by two separate and independent portions, fixed to the wall in an appropriate position. At least one of the C-shaped ends can enable facilitated disengaging, via a forced pushing action directed parallel to the retaining portion; vice versa, an action directed at frontally extracting the object will produce the above-cited deformation by nearing the free ends and increasing the hold.

The holder device 1 of the present invention obviates the problems encountered in the prior art and attains important advantages.

Firstly, the above-described device enables a greater and more exact adjustment of the portable object to be supported.

In particular, the jaw of the above-described device can slide freely along the longitudinal axis thereof in a distancing or nearing direction to the support structure 2, thus increasing the versatility of the device with respect to the different shapes and profiles of the portable objects present on the market.

A further consideration is that the blocking means and configuration of the structure of the device contribute to enabling excellent sliding of the jaws, in the adjusting condition, and the solid blocking thereof in the blocking condition.

A further point is that the blocking of the jaw further determines a pressure, on the part of the free ends 6a of the jaw, of the portable object 4 supported against the rest portion 21 of the support structure 2, producing the consequent blocking thereof in the adjusting position. This blocking guarantees excellent union between the holder device 1 and the portable object 4 even during sudden and violent movements of the vehicle to which the holder device 1 is applied. Therefore the holder device 1 guarantees the structural safety of the portable objects, which remain in the predetermined position up to their removal by the user.

### LIST OF PARTS WITH NUMERICAL REFERENCES

- 1: Holder device
- 2: Support structure
- 4: Portable object
- 4a: Rear surface of the portable object 4
- 4b: Edge of the portable object 4
- 4c: Upper surface of the portable object 4
- 5: Retaining organ
- 6: Jaw of the retaining organ 5
- 6a: Free end of the jaw 6
- 6b: Body of the jaw 6
- 7: Contact portion of the jaw 6
- 8: Rest surface of the contact portion 7
- 9: Retaining portion 9 of the jaw 6
- 10: Engaging surface of the retaining portion 9
- 11: Positioning element of the retaining organ 5
- 11a: Free end of the positioning element 11
- 11b: Body of the positioning element 11
- 12: Abutting portion of the positioning element 11
- 13: Rest surface of the abutting element
- 14: First half-shell of the support structure 2
- 15: Second half-shell of the support structure 2
- 16: Housing seating
- 17: Blocking means
- 18: Blocking opening
- 19: Seating
- 19a: First seating
- 19b: Second seating
- 20: Connecting means
- 21: Rest portion
- 22: Connecting elements

## Claims

1. A holder device for portable objects (4) comprising:
at least a support structure (2),
at least a retaining organ (5) comprising at least a jaw (6) engaged to the support structure (2) and which comprises at least a pair of free ends (6a) arranged one opposite another with respect to the support structure (2), the free ends (6a) forming a housing seating (16) for accommodating and retaining a portable object (4) in a predetermined retained position, which object (4) exhibits a dimension, in particular a thickness, which is considerably smaller with respect to the other two dimensions,
**characterised in that** the jaw (6) is configured such as to enable a relative nearing of the free ends (6a) to one another, following application of a force (F) directed to extracting the portable object (4) from the housing seating (16), in particular the jaw (6), during application of the extraction force (F) on the portable object (4), blocking the object (4) by means of a deformation of the jaw (6), free ends (6a) of which jaw converge along arched trajectories, for example symmetrical.

2. The holder device of the preceding claim, wherein the jaw (6) comprises at least a pair of free ends (6a) and at least a body (6b), the body (6b) exhibiting an elongate and substantially a plate-shape which extends along an extension direction, the body (6b) comprising a connecting portion (6c) destined to engage with the support structure (2), the free end (6a) of the jaw (6) being arranged on an opposite side to the connecting portion (6c), the free end (6a) comprising at least a contact portion (7), connected to the body (6b), which extends along a transversal development direction, in particular perpendicularly, to the extension direction of the body (6b), the free end (6a) further comprising a retaining portion (9), connected to the contact portion (7), which develops along a transversal development direction, in particular perpendicularly, with respect to the development direction of the contact portion (7), the retaining portion (9) developing in a direction of the support structure (2); the body (6b), the contact portion (7) and the retaining portion (9) forming a substantially C-shaped profile which enables the portable object (4) to be retained internally of the housing seating (16).

3. The holder device of any one of the preceding claims, wherein the body (6b) of the jaw (6) exhibits, along the extension direction thereof, a length (L1), and wherein the contact portion (7) exhibits, along the development direction thereof, a length (L2), and wherein the relation between the length (L1) of the body (6b) and the length (L2) of the contact portion (7) is greater than 1, in particular greater than 3, the retaining portion (9) exhibiting, along the development direction thereof, a length (L3), and in which the relation between the length (L1) of the body (6b) and the length (L3) of the retaining portion (9) is greater than 5.

4. The holder device of any one of claims 2 or 3, wherein the development direction of the contact portion (7) is inclined with respect to the extension direction of the body (6b) of the jaw (6), by an angle (α) comprised between 70° and 100°, in particular by an angle (α) comprised between 80° and 95°, and/or in which the development direction of the retaining portion (9) is inclined, with respect to the development direction of the contact portion (7), by an angle (β) comprised between 70° and 100°, in particular by an angle (β) comprised between 80° and 95°, the angles (α, β) being the internal angles of the C facing towards the support structure (2).

5. The holder device of any one of the preceding claims, wherein the connecting portion (6c) is engaged to the support structure (2) via a sliding constraint or alternatively via a joint constraint.

6. The holder device of any one of the preceding claims, wherein the portable object (4) exhibits a substantially parallelepiped shape, in particular a rectangular parallelepiped, or a substantially cylindrical shape, the portable object (4) substantially exhibiting a thickness which is considerably less than the length and width of the portable object (4), the portable object (4) substantially exhibiting a prevalent development plane defined by the length and width of the portable object (4), the portable object (4) being arranged in the housing seating (16) in the predetermined engaging position, with the prevalent development plane substantially parallel to the extension direction of the body (6b) of the jaw (6) and/or to the extension direction of the body (11b) of the positioning element (11).

7. The holder device of any one of the preceding claims, wherein the retaining portion (9) exhibits a surface (10) facing towards the body (6b) of the jaw (6) destined to contact an upper surface (4c) of the portable object (4), the retaining portion (9), during application of the extraction force (F) on the portable object (4), generating a resultant force (R) of reaction on the engaging surface (10), the resultant force (R) exhibiting a point of application on the engaging surface (10) and which generates a flexing force on the body (6b) of the jaw (6) which tends to near the free ends (6b) of the jaw (6) enabling retaining of the portable object (4) internally of the housing seating (16), wherein in particular the resultant force (R) can be broken down into a normal force (Fn) directed perpendicularly to the engaging surface (10) and a tangential force (Ft) directed tangentially to the engaging surface (10), the normal force (Fn) generating a closing momentum (Mc) defined by the product of the normal force (Fn) over a distance (Do) of the directrix lie line of the normal force (Fn) from an engaging point (X0) of the body (6b) with the support structure (2), the tangential force (Ft) generating an opening momentum (Ma) defined as the product of the tangential force (Ft) over a distance (Dv) of the application line directrix of the tangential force (Ft) from the engaging point (X0), the closing momentum (Mc) being greater than the opening momentum (Ma).

8. The holder device of the preceding claim, wherein the resultant force (R) exhibits a direction of application an extension of which intersects the body (6b) of the jaw (6) at an intersection point (X), the intersection point (X) being arranged between an attachment point (Xa) of the contact portion (7) with the body (6b) and an engaging point (X0) at which, during application of the extraction force (F), the maximum flexing momentum is developed; in particular the intersection point (X) and the attaching point (Xa) of the contact portion (7) exhibit a distance (D1) that is smaller than a distance (D2) defined between the reference point (X0) and the attaching point (Xa) of the contact portion (7).

9. The holder device of claim 2, wherein the jaws (6) are two distinct entities and at least one of the jaws (6) is mobile in relation to the support structure (2), such as to be able to vary the dimensions of the housing seating (16) in relation to the dimensions of the portable object (4), in particular in which at least one of the jaws (6) is mobile from a first position, in which the free end (6a) of the jaw (6) is distanced from the support structure (2) to a second position, in which the free end (6a) is neared to the support structure (2), and wherein the bodies (6b) of the jaws (6) are partially superposed on one another, in particular longitudinally superposed on one another, and can slide one on another or alternatively in which the connecting portions face one another.

10. The holder device of any one of the preceding claims, wherein the retaining organ (5) comprises at least a positioning element (11) which comprises at least a body (11b) and at least a free end (11a), the body (11b) exhibiting a substantially plate-shaped form and being destined to engage to the support structure (2), the free end (11a) extending transversally, in particular perpendicularly, with respect to the body (11b) of the positioning element (11), the positioning element (11) being arranged transversally, in particular perpendicularly, with respect to the jaw (6) and being configured such as to control the displacement of the portable object (4) internally of the housing seating (16) in a transversal direction to the jaw (6), the free end (11a) of the positioning element (11) comprising at least an abutting portion (12) extending transversally with respect to the body (11b), the contact portion (12) comprising a rest surface (13) destined to contact at least an edge of the portable object (4) to be supported, the device comprising in particular a pair of positioning elements (11) arranged one opposite another with respect to the support structure (2), and in which at least one of the positioning elements (11) is mobile in relation to the support structure (2) such as to enable adapting to the dimensions of the portable object (4), in particular in which at least one of the positioning elements (11) is mobile from a first position, in which the free end (11a) thereof is distanced from the support structure (2) and a second position, in which the free end (11 a) is neared to the support structure (2).
